# EUROPEAN PATENT SPECIFICATION

(11) **EP 0 859 894 B1**
(45) Date of publication and mention of the grant of the patent: **07.02.2001**
(21) Application number: 96938582.2
(22) Date of filing: 06.11.1996
(51) Int. Cl.: E04C 2/26

(54) **PANEL ELEMENT**
PANEEL
PANNEAU

(30) Priority: 07.11.1995 SE 9503933
(43) Date of publication of application: 26.08.1998
(73) Proprietor: Glasis Holding AB, 860 35 Söraker (SE)
(72) Inventor: ANDERSSON, Bengt, S-860 35 Söraaker (SE); ROST, Volker, D-22523 Hamburg (DE)
(74) Representative: Bjerkén, Jarl Hakan
(86) International application number: SE9601423
(87) International publication number: WO9717508

(56) References cited:
- CH-A- 224 159
- CH-A- 545 395
- DE-A- 1 659 019
- DE-A- 3 101 370
- DE-A- 4 244 672
- SE-B- 318 089
- US-A- 3 583 123

## Description

### FIELD OF THE INVENTION AND PRIOR ART

This invention is related to a panel element of a compound structure comprising at least one layer containing a polymeric material and at least one further layer. The panel element in question is intended to be able to form high quality surface structures in a variety of different connections. As an example it may be mentioned that the panel element may serve to form ceiling and wall surfaces, in particular for interior decoration of vehicles.

Numerous different types of panel elements are well known per se (See for example SE-B-318 089, CH-C-545 395 or DE-A-3 101 370). However, the known panel elements have turned out to have problems in fulfilling the very different requirements which are often imposed on such elements. Among such requirements it may for instance be mentioned low weight and good stability, also when the panel element has a small thickness, stability against influence of moisture, a good resistance to flames and fire, a good sound insulation and a good heat insulation.

### SUMMARY OF THE INVENTION

The object of the invention is to provide a panel element having such a structure that the various requirements stated hereinabove, which as a rule are imposed upon such a panel element, are fulfilled at least in essential regards.

In order to fulfil this object, it is, according to the invention, proposed that the panel element is given the features more specifically defined in the appendent patent claims, and then in particular in the characterizing part of claim 1.

The foam composite material defined in combination with the relatively rigid surface layer form a compound structure having extremely advantageous properties. The foam composite material provides the panel element with insulation capacity with regard to both heat and sound and also a high strength, which is further accentuated by the relatively rigid surface layer as a consequence of the compound structure resulting in a sandwich construction. Resistance to flames and fire is achieved by the composition of the foam composite material itself but also as a consequence of the relatively rigid surface layer, in particular when the same consists of metal.

Advantageous developments are defined in the dependent claims. It is particularly emphasized that it has been surprisingly found, in accordance with claim 8, to substantially increase the sound damping ability of the panel element in case the same is caused to comprise a layer of cork. It is then preferred, according to claim 9, that the cork layer is located between two foam composite material layers.

By designing the panel element according to claim 14 a solution is obtained, where, with two adjacent panel elements, the third surface layer portion of one of the elements protrudes behind the adjacent element so that in this way the relative position between the elements is maintained and furthermore, it is achieved that a butt joint present between the elements will be cut off transversely by the third surface layer portion at the rear side, a fact which entirely eliminates the risk for aesthetically disturbing impressions arising as a consequence of illumination through the butt joint.

Further features and advantages of the invention appear from the rest of the dependent claims and the enclosed detailed description.

### SHORT DESCRIPTION OF THE DRAWINGS

With reference to the enclosed drawings, a more specific description of embodiment examples of the invention follows hereinafter.

In the drawings:
- Fig 1: is a section through a first embodiment of a panel element according to the invention;
- Fig 2: is a view of the element according to Fig 1 viewed in the same direction as the view in Fig 1 but without sectioning;
- Fig 3: is a section along the line III-III showing an embodiment where the panel element is provided with coupling profiles along two edges;
- Fig 4: is a section similar to Fig 1 through a panel element according to an alternative embodiment;
- Fig 5: is a section similar to Fig 4 through a further alternative;
- Fig 6: is a section view illustrating two panel elements according to Fig 5 adjoining to each other edge-to-edge; and
- Fig 7 and 8: are perspective views of the panel element also shown in Figs 5 and 6.

### DETAILED DESCRIPTION OF PREFERRED EMBODIMENTS

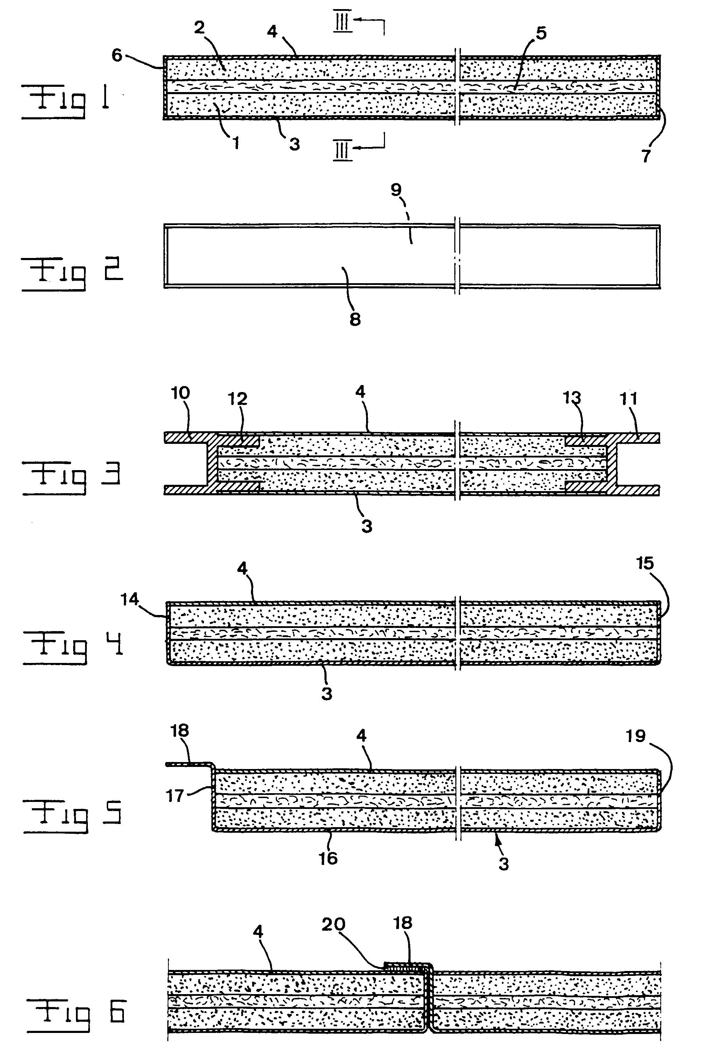

The panel element illustrated in Fig 1 is of a compound structure comprising at least one layer 1, 2 containing a polymeric material. As will be described more closely hereinafter, two such layers 1, 2 are shown in the example. Besides, the panel element comprises at least one further layer 3, 4. This further layer is formed by a relatively rigid surface layer. This surface layer is present on at least a part of the external surface of the panel element. In the example according to Fig 1, it is illustrated that the panel element comprises, on two opposite flat sides, said surface layers 3, 4.

The polymeric material layers 1, 2 are formed by a foam composite material, the more specific nature of which will be discussed in the following. The surface layers 3, 4, or one of them, could be formed by a plastics material of a relatively rigid nature, in particular glass fibre reinforced plastic. However, it is preferred that at least one of the surface layers 3, 4 is formed by a metal layer. Particularly preferred is aluminium or an alloy thereof. In case of surface layers 3, 4 of aluminium plate or other metal it is suitable that the thickness of the surface layer is in the interval of 0.3-1.5 mm. Particularly preferred is 0.5-1.0 mm. In a practical test, excellent results have been achieved with an aluminium plate presenting a thickness of 0.7 mm. The combined thickness of the foam composite material layers 1, 2 in the panel element is suitably within the range 2-75 mm, preferably 3-40 mm. A particularly preferred thickness interval is 3-30 mm. In practice, good results have been achieved in tests with foam composite material thicknesses lying in the interval of 4-20 mm.

The density of the foam composite material is suitably chosen within the range 50-400 kg/m³. A particularly preferred range as far as density is concerned is 100-300 kg/m³.

It has turned out that it is possible to substantially improve the insulation capability of the panel element primarily as far as sound is concerned but also with respect to heat by providing the panel element with a layer 5 of cork. This cork material layer has suitably a thickness within the range 0.5-7 mm, suitably 1-5 mm and preferably about 3 mm.

The cork layer may in practice adopt 5-30% of the total thickness of the panel element.

The density of the cork in the cork layer is 80-600 kg/m³, suitably 150-500 kg/m³ and preferably 200-400 kg/m³.

This cork layer 5 is suitably located between the two foam composite material layers 1, 2 and is bonded to them, suitably by the cork layer 5 and the foam composite material layers 1, 2 having been subjected to laminate pressing in a suitable hot press so that the composite layers 1, 2 and the cork layer have been bonded together. In this pressing course, the surface layers 3, 4 may for the rest also participate in case it would not be preferred to apply the surface layers on the foam composite material layers 1, 2 afterwards by glueing.

It is preferred that the surface layer substantially entirely encloses the foam composite material layers 1, 2, and then also the cork layer 5 in case it occurs. For this purpose the panel element comprises the previously described surface layers 3, 4 on its flat sides and, in addition, the panel element may comprise, along two edges, edge metal layer portions 6, 7, which are indicated, in Fig 1, as consisting of separate edge pieces glued onto the edges of the panel element, suitably such that these edge pieces 6, 7 become located between the surface layers 3, 4.

It appears from the view in Fig 2 that it is possible to arrange, at two edges being at an angle to the edges of the panel element comprising the edge pieces 6, 7, further edge pieces 8, 9 so that the foam composite material layers 1, 2 and the cork layer 5, in case it occurs, become substantially hermetically enclosed so as to achieve tightness against intrusion of moisture.

It is illustrated in Fig 3 that the element according to Fig 1 at two edges could present, instead of the edge pieces 8, 9 just mentioned, particular coupling profiles 10, 11 intended to couple the panel element to arbitrary carrying rails or similar so that the panel element will extend between the same. The coupling profiles 10, 11 are intended to adjoin in a moisture tight manner to the surface layers 3, 4 so that moisture intrusion discussed hereinabove is avoided. As can be seen in Fig 3, the coupling profiles 10, 11 comprise portions 12, 13, which for the purpose of anchorage protrude in between the surface layers 3, 4 and into the foam composite material layers 1, 2 present therebetween.

It is illustrated in Fig 4 that the panel element instead of having separate edge pieces 6, 7 as in Fig 1 has its edge metal layer portions formed by bent edge regions 14, 15 of the surface layer 3. It is then preferred that the surface layer 4 present on the opposite flat side is located between those portions 14, 15 of the surface layer 3 which along the edges protrude upwardly.

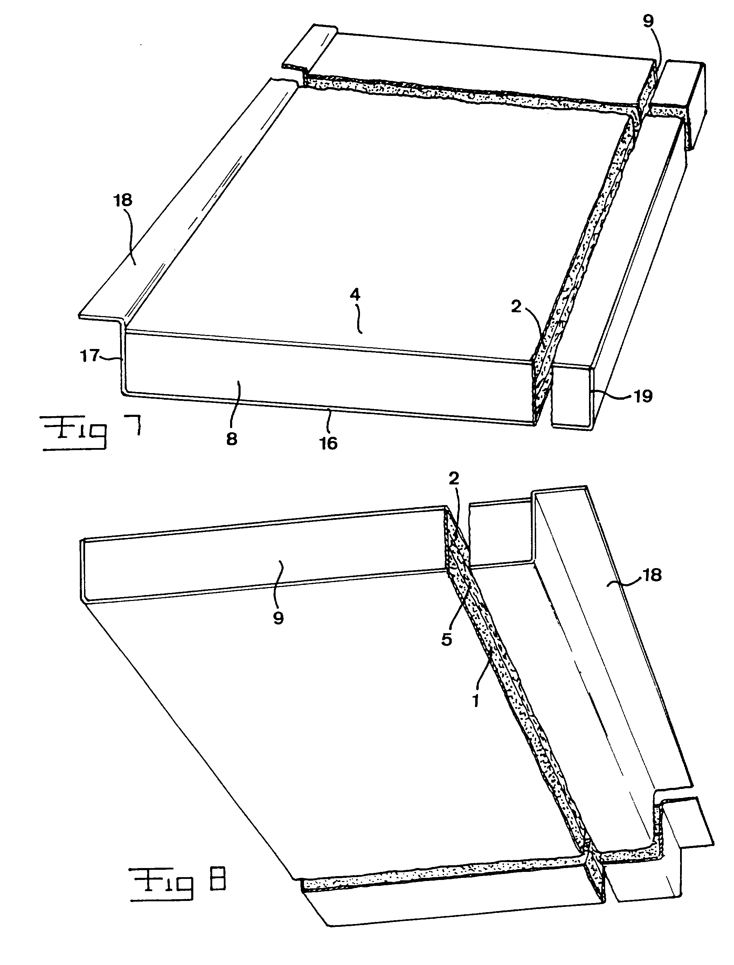

Fig 5 illustrates an embodiment of the panel element comprising a relatively rigid surface layer 3, which on one of the flat sides of the element has a first surface layer portion 16 intended to form the front side of the element. The surface layer 3 has a second portion 17 extending along an edge surface of the panel element, for example by the portion 17 being bent relative to the portion 16. The surface layer 3 comprises, furthermore, a third portion 18 extending substantially parallel to the first portion 16 and being arranged to protrude, when two panel elements adjoin to each other edge-to-edge (Fig 6), behind the adjacent panel element. It also appears from Fig 5 that the surface layer 3 along an opposite edge surface has a fourth portion 19.

It is preferred that the first, second and third surface layer portions 16, 17, 18 are formed in one single bent material piece. Furthermore, it is preferred that also the portion 19 is included in said single material piece.

As appears from Fig 6, an insert 20 is arranged between the portion 18 and the adjacent surface of the surface layer 4 of the adjacent panel element, said insert having the task to avoid relative movement between the adjacent panel elements giving rise to disturbing noise, a fact which in particular may occur in case the surface layers on the adjacent panel elements consist of metal, in particular aluminium plate. The insert 20 consists, suitably, of a sliding promoting material. This material may comprise an adhesive so as to obtain the character of tape, which may be applied either on the portion 18 or on the surface layer 4. The latter variant would normally be preferred. The sliding promoting material may for instance consist of a felt material.

It is pointed out that the panel element according to the invention could be delivered to a customer with one of the surface layers 3, 4 left out. It could then be the question of such a case of application where the panel element in question would not have to comprise any relatively rigid surface layer, for instance an aluminium plate, on its rear side; instead the panel element would be left entirely exposed on said rear side. Another alternative is that the customer is given the possibility to provide as he sees fit a desired surface layer on the panel element afterwards, either on the side intended to be the front side or on the back side.

A description with regard to the nature and possible modes of production with respect to the foam composite material intended for the layers denoted 1 and 2 will follow hereinafter: The foam composite material comprises in a preferred embodiment a web shaped material, which on production of the foam composite material is impregnated with a curable resin and provided with thermoplastic particles distributed in the web shaped material. A semi-manufacture of the foam composite material is suitably prepared in a first operation and then, in a second operation, this semi-manufacture is combined in a suitable number of layers with further material layers, for instance the above described cork layer 5 and/or the surface layers 3, 4 for the purpose of providing the final compound structure or laminate in a pressing procedure.

According to a variant of the production technique according to the invention, the thermoplastic particles may, in said semi-manufacture, be present in expanded state, and the resin is in B-stage. In this connection it is pointed out that a curable resin, which is in A-stage, is meltable, cross-linked to a small degree and soluble in acetone and other solvents. A resin in C-stage is unmeltable, entirely cross-linked and insoluble. The B-stage denotes a stage between the A- and C-stages. In said case of semi-manufacture, the same has the character of a foamed composite having a rigid structure. According to another production possibility, the composite material may, in its character of semi-manufacture, have the thermoplastic particles substantially unexpanded whereas the curable resin is in A- or B-stage. Such a semi-manufacture has a lower freight volume and is flexible, whereby it may be handled, for instance in coil form, without being broken.

Hereunder a more close description of production modes will follow:

A pre-condensate of a waterbased curable resin is produced in a conventional manner and the water contents is regulated so that a dry content of 30-75 percent by weight is obtained. The solution obtained in this way is provided with unexpanded thermoplastic particles, so called microspheres, in such an amount that the weight proportion microspheres: resin in the pressed composite material varies between 4:1 and 1:50. It is preferable to allow the microspheres to be included in such an amount that they in an expanded state form 50-95, preferably 75-95, percent by volume of the web shaped material and the resin mixture. The web shaped material is impregnated with the mixture of resin and microspheres in a conventional manner, e.g. by moving the web down into a bath of the mixture or by spraying the mixture on to the web. The degree of impregnation of the impregnated web may be regulated e.g. by pressing with rolls.

The curable resins, which preferably come in question, are formed by so called formaldehyde-based resins with carbamide, phenol, resorcinol or melamine. However, curable resins may also be used more generally, such as polycondensated resins, e.g. polyimide and polyadded resins, e.g. polyurethane.

The web shaped material may be formed by a woven or non-woven, organic or inorganic material, amongst which glass fibre, mineral fibre, cellulose fibre and polyester fibre may be mentioned in particular. It is also important that the web shaped material has a sufficient porosity to be able to be impregnated with the mixture of resin and microspheres in a satisfactory manner. In order to obtain good conditions for drying and handling of the web shaped material, considered as an individual layer, it has suitably a thickness varying between 0.1 and 5 mm when the microspheres are unexpanded. On the actual laminate production in the hot press, a plurality of such individual composite material layers may, however, be combined mutually and with possible further layers.

The microspheres used on production of the composite material according to the invention have shells which may be formed by copolymers of vinyl chloride and vinylidene chloride, copolymers of vinyl chloride and acrylonitrile, copolymers of vinylidene chloride and acrylonitrile, and copolymers of styrene and acrylonitrile.

Furthermore, copolymers of methyl methacrylate should be mentioned, which contain up to about 20 percent by weight styrene, copolymers of methyl methacrylate and up to about 50 percent by weight of combined monomers of ethyl methacrylate, copolymers of methyl methacrylate and up to about 70 percent by weight of orto chlorostyrene. The particle size of the unexpanded spheres and, accordingly, of the expanded spheres may vary within wide limits and is chosen with guidance of the properties, which are desired of the final product. As an example on particle sizes for unexpanded spheres one may mention 1 µm to 1 mm, preferably 2 µm to 0.5 mm and in particular 5 µm to 50 µm. The diameter of the microspheres increases on expansion with a factor 2-5. The unexpanded spheres contain volatile liquid expanding agents, which are evaporated on the application of heat. These expanding agents may be formed by freons, hydrocarbons, such as n-pentane, i-pentane, neopentane, butane, i-butane and other expanding agents, which conventionally are used in microspheres of the nature here defined. The expanding agent may suitably form 5-30 percent by weight of the microsphere. The microspheres may be added to the resin solution as dried particles or in a suspension, e.g. in water or an alcohol, such as methanol.

The proportion resin to microspheres in the impregnation solution may, as has previously been pointed out, vary within wide limits and this proportion affects the properties of the final product. Conversely, one can, accordingly, choose a suitable proportion resins to microspheres in the mixture starting from a certain field of use and certain desired properties of the final product. This proportion may easily be determined by preparatory experiments in laboratory scale.

The mixture of resins and microspheres may, if so desired or required, be provided with various additives, such as stabilisers, coupling agents, fillers, fire retarding additives and/or pigments.

Thus, the thermoplastic particles occur in the composite material, considered in its capacity as a semi-manufacture, in unexpanded or expanded form and the curable resin occurs in A- or possibly B-stage.

In order to produce the panel element according to the invention the composite material is then placed, in its capacity as a semi-manufacture, in the required number of layers together with further occurring layers, for instance the cork layer 5 and the surface layers 3, 4, in a hot press and the combination is there subjected to heat and pressure so that final curing of the curable resin occurs and possibly remaining expansion of the thermoplastic particles takes place. The composite material is then also bonded together with the other occurring material layers.

It is pointed out that the fibrous material contained in the foam composite material according to the invention does not necessarily have to be provided in the form of a web shaped material in the manner described above. Thus, the fibrous material may be provided with the curable resin and the thermoplastic particles without having to be present in the form of a web.

According to a preferred embodiment of the panel element according to the invention it comprises at least two foam composite material layers 1, 2 having different density. One of the layers could then have a density within the range 100-170 kg/m³ whereas the other material layer could have a density in the range 170-250 kg/m³. These two layers are, according to a possible embodiment, bonded directly to each other. The use of different density in the two foam composite materials have turned out to give a good sound damping. According to another embodiment the layers with different density could have, between each other, a layer of cork in the manner which has already been described above. A practical embodiment, which has turned out to present good strength and sound damping properties, have the following composition counted from the front side towards the rear side: aluminium plate with a thickness of 0.7 mm, 6 mm of a foam composite material having a density of 120 kg per cubic meter, a cork layer having a thickness of 3 mm, a foam composite material layer having a thickness of 4 mm and a density of 210 kg/m³ and finally an aluminium plate layer of 0.7 mm or alternatively a layer consisting of glass fibre reinforced plastic having a thickness of 3 mm.

In case two or more foam composite material layers 1, 2 occur, it may be suitable, from the point of view of sound damping, that they have not only different density but also different thickness.

In use of aluminium plate for the surface layers, it is preferred that the aluminium plate is provided with possible surface refinement of a nature known per se and finally lacquered before pressing/application on the foam composite material. In this connection it is pointed out that the embodiments according to Figs 4-7 are preferable since the bending of the aluminium plate around the edges of the panel element means that no cuts in the aluminium plate will be visible to the viewers; a fact which could occur in the case according to Fig 1.

It is evident that the panel element according to the invention is not only limited to the embodiments exemplified above. Thus, numerous modifications may be made within the framework of the ordinary skill of the man acting within this art and in the light of the application documents in their entirety without leaving the scope of the invention which is determined by the terms of the claims. For instance, it is pointed out there could be, between the surface layers 3, 4 of the panel element, one single foam composite material layer having one and the same density.

## Claims

1. A panel element of a compound structure comprising at least one layer (1, 2) containing a polymeric material and at least one further layer (3, 4), **characterized** in that the further layer (3, 4) is constituted by a relatively rigid surface layer provided on at least a part of the surface of the panel, and that the polymeric material layer (1, 2) is formed by a foam composite material comprising a cured resin, a fibrous material and a thermoplast, which is in the form of expanded particles.

2. A panel element according to claim 1, **characterized** in that the surface layer (3, 4) is formed, at least in part, of plastic, in particular glass fibre reinforced plastic.

3. A panel element according to claim 1 or 2, **characterized** in that the surface layer (3, 4) is formed, at least in part, of a metal layer.

4. A panel element according to claim 3, **characterized** in that the metal is aluminium or an alloy thereof.

5. A panel element according to any preceding claim, **characterized** in that the density of the foam composite material is 50-400 kg/m³.

6. A panel element according to any preceding claim, **characterized** in that the fibrous material is formed by glass fibre.

7. A panel element according to any preceding claim, **characterized** in that the cured resin is a formaldehyde-based resin with carbamide, phenol, resorcinol or melamine.

8. A panel element according to any preceding claim, **characterized** in that it comprises a layer (5) of cork.

9. A panel element according to clam 8, **characterized** in that the cork layer (5) is located between two foam composite material layers (1, 2).

10. A panel element according to any preceding claim, **charac terized** in that the surface layer (3, 4) substantially entirely encloses said at least one foam composite material layer (1, 2).

11. A panel element according to any preceding claim, **charac terized** in that it comprises at least two foam composite material layers (1, 2) having different density.

12. A panel element according to claim 11, **characterized** in that one of the foam composite material layers has a density in the range 100-170 kg/m³, whereas the other foam composite material layer has a density in the range 170-250 kg/m³.

13. A panel element according to any preceding claim, **characterized** in that it on two opposite flat sides comprises relatively rigid surface layers (3, 4), at least one of which is formed by a metal layer, and that the panel element along at least two substantially parallel edges comprises edge metal layer portions (6, 7; 14, 15) formed by either separate edge pieces (6, 7) or bent edge regions (14, 15) of the metal layer (3) provided on one of the flat sides.

14. A panel element according to any preceding claim, **characterized** in that it comprises a relatively rigid surface layer (3), which on at least one of the flat sides of the element has a relatively rigid first surface layer portion (16) intended to form the front side of the element, that the surface layer (3) has a second portion (17) extending along an edge surface of the panel element, that the surface layer comprises a third portion (18) extending substantially parallel to the first portion (16) and being arranged to protrude, when two panel elements adjoin to each other edge-to-edge, behind the adjacent element.

15. A panel element according to claim 14, **characterized** in that the first, second and third surface layer portions (16, 17, 18) are in one single material piece.

16. A panel element according to any preceding claim, **charac terized** in that it is formed by a prefabricated ceiling or wall surface forming element, in particular for interior fitting of vehicles.

## Patentansprüche

1. Paneel mit einem Verbundaufbau, der wenigstens eine, ein Polymermaterial enthaltende Schicht (1, 2) und mindestens eine weitere Schicht (3, 4) umfaßt, dadurch gekennzeichnet, daß die weitere Schicht (3, 4) von einer relativ starren Oberflächenschicht gebildet ist, die auf zumindest einem Teil der Oberfläche des Paneels vorhanden ist, und daß die Polymermaterialschicht (1, 2) von einem Schaumverbundmaterial gebildet ist, das ein gehärtetes Harz, ein Fasermaterial und einen Thermoplasten umfaßt, der in Form aufgeschäumter Partikel vorliegt.

2. Paneel nach Anspruch 1,
dadurch gekennzeichnet, daß die Oberflächenschicht (3, 4) zumindest zum Teil aus Kunststoff besteht, insbesondere aus glasfaserverstärktem Kunststoff.

3. Paneel nach Anspruch 1 oder 2,
dadurch gekennzeichnet, daß die Oberflächenschicht (3, 4) zumindest zum Teil aus einer Metallschicht besteht.

4. Paneel nach Anspruch 3,
dadurch gekennzeichnet, daß das Metall Aluminium oder eine Legierung davon ist.

5. Paneel nach einem der vorhergehenden Ansprüche,
dadurch gekennzeichnet, daß die Dichte des Schaumverbundmaterials 50 bis 400 kg/m³ beträgt.

6. Paneel nach einem der vorhergehenden Ansprüche,
dadurch gekennzeichnet, daß das Fasermaterial aus Glasfasern gebildet ist.

7. Paneel nach einem der vorhergehenden Ansprüche,
dadurch gekennzeichnet, daß das gehärtete Harz ein Harz auf Formaldehydbasis mit Carbamid, Phenol, Resorcin oder Melamin ist.

8. Paneel nach einem der vorhergehenden Ansprüche,
dadurch gekennzeichnet, daß es eine Schicht (5) aus Kork umfaßt.

9. Paneel nach Anspruch 8,
dadurch gekennzeichnet, daß die Korkschicht (5) zwischen zwei Schaumverbundmaterialschichten (1, 2) angeordnet ist.

10. Paneel nach einem der vorhergehenden Ansprüche,
dadurch gekennzeichnet, daß die Oberflächenschicht (3, 4) die wenigstens eine Schaumverbundmaterialschicht (1, 2) im wesentlichen vollständig umschließt.

11. Paneel nach einem der vorhergehenden Ansprüche,
dadurch gekennzeichnet, daß es wenigstens zwei Schaumverbundmaterialschichten (1, 2) mit unterschiedlicher Dichte aufweist.

12. Paneel nach Anspruch 11,
dadurch gekennzeichnet, daß eine der Schaumverbundmaterialschichten eine Dichte im Bereich von 100 bis 170 kg/m³ hat, während die andere Schaumverbundmaterialschicht eine Dichte im Bereich von 170 bis 250 kg/m³ hat.

13. Paneel nach einem der vorhergehenden Ansprüche,
dadurch gekennzeichnet, daß es auf zwei gegenüberliegenden flachen Seiten relativ starre Oberflächenschichten (3, 4) aufweist, von denen wenigstens eine von einer Metallschicht gebildet ist, und daß das Paneel längs zumindest zweier, im wesentlichen paralleler Ränder Metallschichtrandabschnitte (6, 7; 14, 15) aufweist, die entweder von separaten Randstücken (6, 7) oder von gebogenen Randbereichen (14, 15) der Metallschicht (3) gebildet sind, die auf einer der flachen Seiten vorhanden ist.

14. Paneel nach einem der vorhergehenden Ansprüche,
dadurch gekennzeichnet, daß es eine relativ starre Oberflächenschicht (3) aufweist, die auf wenigstens einer der flachen Seiten des Paneels einen relativ starren ersten Oberflächenschichtabschnitt (16) hat, der dazu bestimmt ist, die Vorderseite des Paneels zu bilden, daß die Oberflächenschicht (3) einen zweiten Abschnitt (17) hat, der sich entlang einer Randfläche des Paneels erstreckt, und daß die Oberflächenschicht einen dritten Abschnitt (18) umfaßt, der sich im wesentlichen parallel zum ersten Abschnitt (16) erstreckt und so angeordnet ist, daß er, wenn zwei Paneele Rand an Rand aneinanderstoßen, hinter das angrenzende Paneel ragt.

15. Paneel nach Anspruch 14,
dadurch gekennzeichnet, daß der erste, der zweite und der dritte Oberflächenschichtabschnitt (16, 17, 18) als ein einziges Materialstück ausgebildet sind.

16. Paneel nach einem der vorhergehenden Ansprüche,
dadurch gekennzeichnet, daß es durch ein vorgefertigtes Dachoder Wandoberflächen bildendes Element, insbesondere für die Innenausstattung von Fahrzeugen, gebildet ist.

## Revendications

1. Elément de panneau d'une structure composé comprenant au moins une couche (1, 2) contenant une matière polymère et au moins une autre couche (3, 4),
caractérisé en ce que l'autre couche (3, 4) est constituée par une couche de surface relativement rigide prévue sur au moins une partie de la surface du panneau, et en ce que la couche de matière polymère (1, 2) est formée par une matière composite en mousse comprenant une résine durcie, une matière fibreuse et une matière thermoplastique, qui est sous la forme de particules expansées.

2. Elément de panneau selon la revendication 1,
caractérisé en ce que la couche de surface (3, 4) est réalisée, au moins en partie, en plastique, en particulier en plastique renforcé de fibres de verre.

3. Elément de panneau selon la revendication 1 ou 2,
caractérisé en ce que la couche de surface (3, 4) est réalisée, au moins en partie, en une couche de métal.

4. Elément de panneau selon la revendication 3,
caractérisé en ce que le métal est de l'aluminium ou un alliage de celui-ci.

5. Elément de panneau selon une quelconque revendication précédente,
caractérisé en ce que la masse volumique de la matière composite en mousse est de 50-400 kg/m³.

6. Elément de panneau selon une quelconque revendication précédente,
caractérisé en ce que la matière fibreuse est réalisée en fibres de verre.

7. Elément de panneau selon une quelconque revendication précédente,
caractérisé en ce que la résine durcie est une résine à base de formaldéhyde avec du carbamide, du phénol, du résorcinol ou de la mélamine.

8. Elément de panneau selon une quelconque revendication précédente,
caractérisé en ce qu'il comprend une couche (5) de liège.

9. Elément de panneau selon la revendication 8,
caractérisé en ce que la couche de liège (5) est située entre deux couches de matière composite en mousse (1, 2).

10. Elément de panneau selon une quelconque revendication précédente,
caractérisé en ce que la couche de surface (3, 4) enferme sensiblement totalement ladite couche de matière composite en mousse (1, 2).

11. Elément de panneau selon une quelconque revendication précédente,
caractérisé en ce qu'il comprend au moins deux couches de matière composite en mousse (1, 2) ayant une masse volumique différente.

12. Elément de panneau selon la revendication 11,
caractérisé en ce que l'une des couches de matière composite en mousse a une masse volumique dans la plage de 100-170 kg/m³, tandis que l'autre couche de matière composite en mousse a une masse volumique dans la plage de 170-250 kg/m³.

13. Elément de panneau selon une quelconque revendication précédente,
caractérisé en ce que, sur deux faces planes opposées, il comprend des couches de surface relativement rigides (3, 4), dont au moins une est formée par une couche de métal, et en ce que l'élément de panneau le long d'au moins deux bords sensiblement parallèles comprend des portions de couche de métal (6, 7 ; 14, 15) formées soit par des pièces de bord séparées (6, 7) ou par des régions de bord courbées (14, 15) de la couche de métal (3) prévue sur l'une des faces planes.

14. Elément de panneau selon une quelconque revendication précédente,
caractérisé en ce qu'il comprend une couche de surface relativement rigide (3) qui, sur au moins l'une des faces planes de l'élément, présente une première portion de couche de surface (16) relativement rigide destinée à former la face frontale de l'élément, en ce que la couche de surface (3) présente une deuxième portion (17) s'étendant le long d'une surface de bord de l'élément de panneau, en ce que la couche de surface comprend une troisième portion (18) s'étendant sensiblement en parallèle à la première portion (16) et étant agencée pour faire saillie, quand deux éléments de panneau sont joints l'un à l'autre bord à bord, derrière l'élément adjacent.

15. Elément de panneau selon la revendication 14,
caractérisé en ce que les première, deuxième et troisième portions de couche de surface (16, 17, 18) sont en une pièce de matière unique.

16. Elément de panneau selon une quelconque revendication précédente,
caractérisé en ce qu'il est formé par un élément formant surface murale ou de plafond préfabriqué, en particulier pour l'aménagement intérieur de véhicules.
